Europäisches Patentamt

European Patent Office

Office européen des brevets

(11) Publication number: **0 054 592**
A1

# (12) EUROPEAN PATENT APPLICATION

(21) Application number: **80304721.6**

(22) Date of filing: **23.12.80**

(51) Int. Cl.³: **F 16 C 23/04**, F 16 C 11/06

(43) Date of publication of application: **30.06.82**
**Bulletin 82/26**

(84) Designated Contracting States: **CH DE FR GB IT LI SE**

(71) Applicant: **INCOM INTERNATIONAL INC., 415 Holiday Drive, Pittsburgh, Pennsylvania 15220 (US)**

(72) Inventor: **McCloskey, Albert R., 67, Ona Terrace, Fairfield Connecticut 06430 (US)**

(74) Representative: **Dixon, Donald Cossar et al, Gee & Co. Chancery House Chancery Lane, London WC2 1QU (GB)**

(54) **Method of manufacturing spherical bearings.**

(57) A spherical bearing having an outer member (12) with an opening (14) therethrough and a concave inner surface (16) on the inner surface of the outer member, and an inner member (24) with a convex outer surface (26) complementary to and in precise spherical bearing conformity with the concave inner surface (16) is manufactured by a method which comprises the steps of preforming the inner and outer members to their substantially final dimensions, forcing the inner member within the opening of the outer member, the inner member acting as a die to enlarge one end of the opening thereby cold-working an annular portion of the outer member which surrounds the opening.

METHOD OF MANUFACTURING SPHERICAL BEARINGS

This invention relates generally to a novel method for manufacturing spherical bearings.

More particularly the present invention relates to a method of manufacturing a spherical bearing having an outer member with an opening therethrough and a concave inner surface on the inner surface of the outer member, an inner member with a convex outer surface complementary to and in precise spherical bearing conformity with the concave inner surface comprising the steps of preforming the inner and outer members to their substantially, final dimensions, forcing the inner member within the opening of of the outer member, the inner member acting as a die to enlarge one end of the opening thereby cold working an annular portion of the outer member which surrounds the opening.

Spherical bearings or ball and socket type ball bearings are in a broad sense an extremely old art. One only has to look back to the first forms of animal life in which bones and joints were present. Typically, the specifications for spherical bearing assemblies are most exacting as to shape, dimension and overall strength. Spherical bearings present unique problems of achieving uniform bearing contact between the convex outer surface of the ball and the concave inner surface of the outer race member of the socket. This requirement of uniform bearing contact, therefore requires a high order and type of dimensional control over the various elements comprising the spherical bearing assembly as well as the method and apparatus by which the bearing assembly is manufactured.

Spherical bearing assemblies continue to gain wider and wider acceptance in industry and accordingly there are continual efforts to improve upon the quality of the spherical bearing product while at the same time to simplify the method of manufacturing these spherical bearings. Typically, the method of manufacturing these types of bearings have included numerous, complicated and costly steps regarding sophisticated, expensive and difficult to maintain apparatus.

It is therefore an object of the present invention to provide a versatile, rapid, inexpensive, and easy-to-control method of manufacturing a spherical bearing assembly.

Another objective of the present invention is to provide a simple and unique method of manufacturing a spherical bearing assembly.

It is still another object of the present invention to provide a method of manufacturing a spherical bearing having an outer member with an opening therethrough and a concave inner surface on the inner surface of the outer member, an inner member with a convex outer surface complementary to and in precise spherical bearing conformity with the concave inner surface comprising the steps of preforming the inner and outer members to their substantially, final dimensions, forcing the inner member within the opening of the outer member, the inner member acting as a die to enlarge one end of the opening thereby cold working an annular portion on the outer member which surrounds the opening.

It is yet another important object of the present invention to provide a method of manufacturing spherical bearings wherein the method further comprises forcing the inner member into the opening of the outer member until the inner member passes its equator and is captured within the outer member.

It is still a further objective of the present invention to provide a method of manufacturing spherical bearings wherein the method further comprises centralizing the inner and outer members with respect to each other before forcing the inner member within the outer member.

It is still another important object of the present invention to provide a method of manufacturing spherical bearings wherein the method further comprises capturing the inner member within the outer member by the springing of the annular portion partially back to its original dimensions before it was acted upon by the die action of the inner member.

It is yet another important object of the present invention to provide a method of manufacturing spherical bearings wherein the method further comprises reforming the outer member to its original dimensions after forcing the inner member within the outer member.

It is still a further object of the present invention to provide a method of manufacturing spherical bearings wherein the method further comprises reforming the outer member to its original dimension by applying a compressive force to the outer surface of the outer member.

It is still another important object of the present invention to provide a method of manufacturing spherical bearings wherein the method further comprises applying a compressive force to the outer surface of the outer member by forcing the outer member into and through a progressively tapered die.

It is yet another important object of the present invention to provide a method of manufacturing spherical bearings wherein the method further comprises forming at least one annular staking groove on the radial faces of the outer member before forcing the inner member within the outer member.

Still another object of the present invention is to provide a method of manufacturing spherical bearings wherein the method further comprises forcing the inner member within the outer member by holding the outer member relatively stationary with respect to the inner member and applying the force to the inner member.

It is still another important object of the present invention to provide a method of manufacturing spherical bearings wherein the method further comprises preforming the concave inner surface and the convex outer surface to their final dimensions before forcing the inner member within the opening of the outer member.

It is yet another important object of the present invention to provide a method for manufacturing spherical bearing assemblies which are readily adapted to high volume technique and apparatus and are inexpensive to practice.

It is a further object of the present invention to provide a method of manufacturing spherical bearings wherein the method further comprises forcing the inner member within the outer member by holding the inner member relatively stationary with respect to the outer member and applying the force to the outer member.

It is still another important object of the present invention to provide a method of manufacturing spherical bearings wherein the method further comprises forming at least one oil lubricating bore through the outer member before forcing the inner member within the outer member.

It is a further important object of the present invention to provide a method of manufacturing spherical bearings wherein the method further comprises providing an inner member of harder material than the material of the outer member.

These and other and further objects and features of the invention are apparent in the disclosure which includes the foregoing and ongoing specification with the appended claims and which includes the drawings.

In the accompanying drawings:-

Figure 1 is a sectional view of an inner and an outer member of a spherical bearing assembly in their unassembled state.

Figure 2 is the inner and outer members of Figure 1 wherein the inner member has been forced within the outer member.

Figure 3 is the inner and outer members of Figure 2 wherein both the members are in their final assembled state.

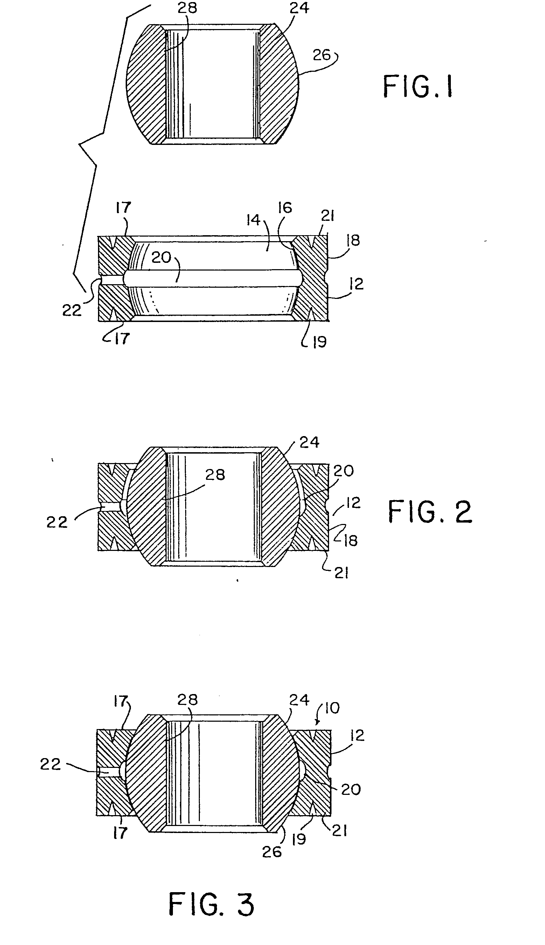

Referring now to the drawings and in particular FIGS. 1 through 3 there is shown the various steps comprising the unique method of manufacturing spherical bearing assemblies in accordance with the present invention as well as a complete spherical bearing assembly 10.

Now more particularly referring to FIG. 1 there is shown a spherical bearing assembly in its unassembled state, the assembly comprising an outer member 12; the outer member 12 is provided with a center hole, bore or opening 14 therethrough. The opening 14 defines the inner surface of the outer member 12, the inner surface 16 being a spherical concave surface.

The outer member 12 is also provided with a substantially cylindrical outer surface 18 and two radially extending faces 17. Typically, the outer member 12 is inserted within a complementary apertured machine element, device, etc. (not shown) such that such machine element or device surrounds and embraces the outer member at its outer surface 18. The radially extending faces 17 may be interrupted by the provision of a staking groove 19 referred to sometimes as a "Grumman type" groove. As their name implies, the staking grooves are used to operationally fix or position the outer member 12 within its associated machine element or the like. The staking grooves 19 may be "V" shaped having a radius of curvature at its base and are provided generally near the intersection of radial faces 17 and outer surface 18 to define a deformable annular lip 21. The deformable lip 21 may be flared into intimate contact with its associated machine element to mechanically fix it therein and thereto. As contemplated by the present invention at least one staking groove 19 may be provided on the radial face 17 of the outer member 12 before the outer member 12 is assembled in accordance with the present invention. This feature of the invention will be explained more fully below.

A lubrication groove 20 is provided on the inner surface 16 of the outer member 12; the lubrication groove being continuous to provide lubrication around the entire inner surface 16. A lubrication channel or bore 22 is provided through the outer member 12, the bore 22 being in communication with the lubrication groove 20. The bore 22 is the means by which grease or other suitable lubricant is provided to the lubrication groove and this feature of the invention will also be explained more fully below.

The outer member 12 as above-described is provided preformed in essentially its final shape including a number of features such as lubrication groove 20, lubrication bore 22 and staking grooves 19.

In Figure 1 there is also shown an inner member 24 which is provided with a convex outer spherical surface 26 which is preformed to such dimensions as to be generally complementary to the concave spherical inner surface 16 of the outer member 12. The inner member 24 is also provided with a centrally disposed cylindrical bore 28 therethrough. The central bore 28 is used to operationally attach the inner member 24 to an associated part, machine element, device or the like. This is typically accomplished by nut and bolt arrangement, the shank of the bolt being in registration with the cylindrical bore 28.

As with the outer member 12, this inner member 24 as described above is provided preformed in essentially its final shape including its central bore 28, etc. The preforming of both the inner member 24 and the outer member 12 can be accomplished by a number of techniques such as machining using tools such as lathes and screw machines.

After the preforming of the inner member 24 and the outer member 12, the inner member 24 is then forced within the outer member 12. This unique approach is accomplished by using the inner member 24 as die which acts upon the outer member 12. More particularly, the inner member 24 by die action enlarges one end of the opening 14 to allow the passage and final insertion of the inner member 24 within the opening 14 of the outer member 12. This die action effects cold working of an annular portion of the outer member which surrounds the enlarged opening.

Figure 2 shows the inner member 24 forcibly inserted within the outer member 12 and further shows how the outer member "springs back" to surround and capture the inner member 24 within its opening. The inner member 24 is forced within the outer member 12 such that the longitudinal axis of the opening 14 would be coincident with the longitudinal axis of the bore 28 of the inner member 24.

It can be further seen in Figure 2 that the outer member 12 only partially springs back after the die action of the inner member 24. Accordingly, the outer member must be reformed to its original dimensional character to complete the assembled spherical bearing 10 as depicted in Figure 3. A compressive force is then to be applied to the outer surface 18 of the outer member 12 to bring the concave inner surface 16 into precise spherical bearing conformity with the convex surface 26 of the inner member 24. The degree of bearing tolerance between the inner member 24 and the outer member 12 at their respective bearing surfaces 26 and 16 can be very closely controlled. By varying the preformed dimensions such as undersizing of the concave inner surface 16, a preselected and predetermined degree of interference fit can be achieved if desired.

-9-                        0054592

It can be seen, therefore, that it is the "die action" of the inner member 24 that effects the assembling of the inner member 24 within the outer member.  This action significantly reduces the production costs while at the same time results in a superior bearing product.  For example, the staking grooves 19 may be provided on the radial faces 17  of the outer member 12 before the bearing 10 is assembled.  This is important, for such machining before assembly allows for easy cleaning of the outer member 12. If, however, the staking grooves 19 are machined after assembly, the metal chips and dirty oil resulting from the machining could contaminate the bearing 10.  In the prior art methods of making spherical bearings this step had to be performed after the assembly of the bearing for most of the prior art forming force is exerted on or through the outer member so any staking grooves would be obliterated by such forces, and at the very least such forces would distort the grooves.  This obliteration and/or distortion is avoided due to the fact that the reforming of the outer member 12, which may be accomplished·by passing the outer member 12 through a progressively tapered conical die, only involves the application of a compressive reforming force to that part of the outer member 12 which has been deformed by the die action of the inner member 24.  This limited and controlled application of a compressive reforming force will not obliterate the staking grooves 19 or adversely effect the deformable lip 21.  The staking grooves 19 may, therefore, be pre-applied to either or both of the radially extending faces 17 before assembly.

Similarly, the lubrication bore 22 may also be machined through the outer member 12 before assembly.  This results in the same benefits as the pre-application of the staking grooves 19, namely, avoidance of contamination of the assembled bearing by metal chips and/or dirty oil resulting from machining the bore 22.

The materials for the outer member 12 or the inner member 24 may be selected from various types of materials, including both heat treated and non-treated steels as for example, SAE 4130 steel, C1018 steel, 440C steel, SAE 52100 steel, etc. The selection of the proper materials and material treatments will depend on a variety of factors including application, environment, size, etc.

As before mentioned the reforming of the outer member 12 may be accomplished by a tapered die. The forms of the remaining portions of the apparatus are to be the subject of another one of my inventions. It might be added, that the present method contemplates a variety of forming motions of the inner member 24 with respect to the outer member 12. That is, the inner member 24 may, for example, be held stationary with respect to the outer member 12, as the inner member 24 is forced within the outer member 12, or vice-versa. Further, they both may be moved with respect to each other.

While the invention has been described with reference to specific embodiments, it will be obvious to those skilled in the art that modifications and variations of the invention may be constructed without departing from the spirit and scope of the invention. The scope of the invention is defined in the following claims.

- 11 -

CLAIMS

1. A method of manufacturing a spherical bearing having an outer member with an opening therethrough and a concave inner surface on the inner surface of said outer member, an inner member with a convex outer surface complementary to and in precise spherical bearing conformity with said concave inner surface characterized by the steps of preforming the inner and outer members to their substantially final dimensions, forcing the inner member within the opening of the outer member, the inner member acting as a die to enlarge one end of the opening thereby cold working an annular portion of the outer member which surrounds the opening.

2. A method of manufacturing spherical bearings in accordance with Claim 1 wherein the method further is characterized by capturing the inner member within the outer member by the springing of the annular portion partially back to its original dimensions before it was acted upon by the die action of said inner member.

3. The method of manufacturing spherical bearings of Claim 1 wherein the method further is characterized by reforming the outer member to its originial dimensions after forcing the inner member within the outer member.

0054592

_12_

4. The method of manufacturing spherical bearings of Claim 3 wherein the method further is characterized by reforming the outer member to its original dimension by applying a compressive force to the outer surface of said outer member.

5. The method of manufacturing spherical bearings of Claim 4 wherein the method further is characterized by applying a compressive force to the outer surface of said outer member by forcing said outer member into and through a progressively tapered die.

6. A method of manufacturing spherical bearings in accordance with Claim 1 wherein the method further is characterized by forcing the inner member into said opening of said outer member until the inner member passes its equator and is captured within said outer member.

7. The method of manufacturing spherical bearings of Claim 1 wherein the method further is characterized by preforming said concave inner surface and said convex outer surface to their final dimensions before forcing the inner member within said opening of said outer member.

8. The method of manufacturing spherical bearings of Claim 1 wherein the method further is characterized by forming at least one oil lubricating channel through said outer member before forcing said inner member within said outer member.

9.    A method of manufacturing spherical bearings, substantially as hereinbefore described.

10.    Spherical bearings whenever produced by a method according to any preceding Claim.

FIG. 1

FIG. 2

FIG. 3

European Patent
Office

**EUROPEAN SEARCH REPORT**

Application number

EP 80 30 4721.6

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - B - 1 575 449 (THE FAFNIR BEARING CO.) <br> * claim 1; fig. 1 to 11 * <br> & US - A - 3 371 398 <br> -- | 1,3-5, 9,10 | F 16 C 23/04 <br> F 16 C 11/06 |
| | DE - U - 1 943 188 (H. ELGES KG.) <br> * claim 1; fig. * <br> -- | 1,2,6 | |
| | US - A - 2 995 813 (D.A. BOARD, JR.) <br> * claims 1 to 3; fig. 1 to 8 * <br> -- | 1,3,4, 8 | TECHNICAL FIELDS SEARCHED (Int. Cl.³) |
| A | GB - A - 1 426 950 (ROCKWELL INTER- NATIONAL CORP.) <br> -- | | F 16 C 11/00 <br> F 16 C 23/00 <br> F 16 C 33/00 |
| A | US - A - 2 366 668 (L.R. HEIM) <br> -- | | F 16 C 43/00 |
| A | US - A - 2 541 160 (L.R. HEIM) <br> -- | | |
| A | US - A - 2 626 841 (L.R. POTTER) <br> -- | | |
| A | US - A - 2 724 172 (L.R. POTTER) <br> -- | | CATEGORY OF CITED DOCUMENTS |
| A | US - A - 3 662 462 (R.H. SHIFLET) <br> ---- | | X: particularly relevant <br> A: technological background <br> O: non-written disclosure . <br> P: intermediate document <br> T: theory or principle underlying the invention <br> E: conflicting application <br> D: document cited in the application <br> L: citation for other reasons |
| | | | &: member of the same patent family, corresponding document |

| | The present search report has been drawn up for all claims | | |
|---|---|---|---|
| Place of search <br> Berlin | Date of completion of the search <br> 14-07-1981 | Examiner <br> MASSALSKI | |

EPO Form 1503.1  06.78